# EUROPEAN PATENT APPLICATION

(11) **EP 1 698 396 A1**
(43) Date of publication of application: **06.09.2006**
(21) Application number: 04820640.3
(22) Date of filing: 19.11.2004
(51) Int. Cl.: B01J 20/28, B01J 20/12

(54) **ADSORBENT, PROCESS FOR PRODUCING THE SAME AND PRODUCTION APPARATUS**

(30) Priority: 24.12.2003 JP 2003427137
(71) Applicant: Aiba, Toshiyuki, Otsu-shi, Shiga 520-0027 (JP)
(72) Inventor: Aiba, Toshiyuki, Otsu-shi, Shiga 520-0027 (JP)
(74) Representative: Johnson, Terence Leslie
(86) International application number: PCT/JP2004/017252
(87) International publication number: WO 2005/061102

(57) **Abstract**

[OBJECTS] To provide an adsorbent with improved adsorbing capacity, easiness to shaping and appearance, by ordinary extrusion, and to provide a method of and an apparatus for making the adsorbent.

[MEANS FOR ACHIEVEMENT] Outlet of an extruder (2) fits on a mold (3) having plural pins (31) of the same cross section as fluid channels (11). A narrow interstice (32) intervenes between the adjacent pins fixed upright on a base plate (33). A detour (35) conducting a fluidic raw material mixture (13) is defined inside a mantle (34) and around the base plate. The mixture composed of a carbonaceous powder and an inorganic powder with or without a binder and water to knead them is forced into the interstices so as to form an uncured product (14). Vestiges of the pins (31) remain as fluid channels (11) each surrounded by peripheral walls (12), and the uncured product is dried and then possibly sintered to render porous and rigid the peripheral walls thus congregated to give a solid mass.

## Description

### TECHNOLOGICAL FIELD OF THE INVENTION

The present invention relates to the structure of an adsorbent for adsorbing and removing an amount of impurities such as dust or ill-smelling foreign particles out of a fluid such as water or air, and further relates to a process for producing the adsorbent as well as a production apparatus therefor.

### BACKGROUND ART

The adsorbent referred to herein is the generic name of certain materials whose surfaces have such physical-and-chemical properties that may be utilized to adsorb and remove dust, ill-smelling foreign particles or the like out of a fluid such as water or air. Such adsorbents are used for deodorization, purification and/or antiseptic treatments of water, air or the like fluids, for de-coloration of sugars, and also in medical treatments for removing toxic substances out of human bodies. The most popular raw materials used nowadays to make those adsorbents are natural and porous carbonaceous materials such as charcoal or animal charcoal, natural minerals such as activated clay, and synthesized inorganic materials such as titanium dioxide, alumina, silica and zeolite. Usually, these materials are provided in the form of a powder, granules or pellets, and they are packed in or covered with a bag made of a permeable sheet so as to be directly disposed at a target place that is to be purified or cleaned up. Alternatively, the bag may be held in a lattice-shaped protective case that is of a design suited to the target place and has a plurality of air holes. Such a target place may be the interior of a refrigerator or a water vessel, or a water-purifying device disposed in the vicinity of a city water tap. Fibrous activated carbon and the like are further examples of the adsorbent, and are used in the form of a felt or mat to be held in a container or on a carrier of a configuration matching the usage of this adsorbent.
References:
Non-Patent Document 1: "Chemical Industries Handbook" sixth revision, pages 692 - 696, edited by Chemical Industries Society, a Japanese corporate juridical entity, issued by N. Suzuki, from the Maruzen Co., Ltd. on February 25, 1999
Patent Document 1: Japan Laying-Open Gazette No. 2002-219324
Patent Document 2: ibid. No. 2003-33426

It is however to be noted that each of the adsorbents described above and provided in the form of a powder, granules or pellets have not necessarily been convenient to use as it is. They have required somewhat expensive containers or carriers such as protective cases that were not of any ornamental appearance. Disposition and/or structure of such containers have been concerned not to be an eyesore. Even in a case wherein those adsorbents are used on a large scale in a water purification tank, it also is a problem that they need not only a protective bag but also filtration devices.

### DISCLOSURE OF THE INVENTION

### OBJECTS TO BE ACHIEVED HEREIN

An object of the present invention that was made to resolve the problems inherent in the prior art are therefore to provide a novel adsorbent that is not only porous and of a highly-adsorbing capacity but also comprises a plurality of fine passages for fluids and are capable of self-sustenance of any designed configuration. This adsorbent should be easy to shape without impairing its finished appearance. Further objects of the present invention are to provide a method of and an apparatus for making such a novel adsorbent proposed herein.

### SOLUTIONS

From a first aspect of the present invention as defined in the accompanying claim 1, an adsorbent comprises a plurality of internal peripheral walls 12 formed of a porous and adsorbing material such that each of these walls defines therein and longitudinally thereof a fine cylindrical fluid passage or channel 11. The internal peripheral walls 12 are consolidated together to form a rigid mass in such a fashion that a plurality of the fluid passages or channel 11 are arranged close to and in parallel with each other in every direction, vertical, horizontal and oblique. Dimension of each fluid passage is not necessarily limited to any restrictive value, but diameter or width thereof may be about 0.8 - 5 *mm,* more preferably about 0.8 - 3 *mm*. Thickness of each peripheral wall as a partition intervening between the adjacent fluid passages may be about 0.15 - 1 *mm,* more preferably about 0.2 - 0.8 *mm.*

From a second aspect of the invention as set forth in the accompanying claim 5, a method of making an adsorbent summarized above may comprise the step of preparing a mold or "die" (hereinafter called "mold") 3 to be attached to a distal end of a nozzle 2n in an extruder 2, such that a cylindrical wall 34 surrounds a base plate 33 held therein and a detour35 for a raw material forming the adsorbent is defined around the base plate. A plurality of thin and elongate pins 31 each of the same cross section as that of each of fine cylindrical fluid passages or channels 11 present in the adsorbent 1 are fixed upright on the base plate 33 in such a state that minute clearances 32 intervene each between the adjacent pins 31. The method further comprises the step of preparing as the raw material a fluidic mixture 13 that may either be composed of a carbonaceous material powder and an inorganic material powder, or composed of an inorganic material powder and a binder kneaded and blended therewith using water. The present method still further comprises the steps of continuously forcing the fluidic mixture as the raw material into the clearances 32 between the adjacent pins 31 so as to form a material flow, by directing it away the extruder 2 and then into the detour 35 formed for the raw material in the mold 3, consequently keeping the material flow to provide an uncured product 14 near and outside an exit of the mold 3 in such a state that the uncured product has a plurality of fluid passages or channels 11 each defined through an internal peripheral wall 12 due to continuous spaces which the pins 31 have been occupying, and finally finishing the uncured product 14 to give the adsorbent 1, either by merely drying or by successively drying and sintering the uncured product.

From a third aspect of the invention as set forth in the accompanying claim 6, an apparatus for making an adsorbent summarized above may comprise a hopper 2h for storing and discharging a raw material for forming the adsorbent, an extruder 2 having a nozzle 2n, a mold 3 constructed such that a cylindrical wall 34 surrounds a base plate 33 held therein and a detour 35 for the raw material is defined around the base plate and a plurality of thin and elongate pins 31 each of the same cross section as that of each of fine cylindrical fluid passages or channels 11 present in the adsorbent 1 are fixed upright on the base plate 33 in such a state that minute clearances 32 intervene each between the adjacent pins 31, with the mold 3 being attached to a distal end region of the nozzle, and facilities 4 for drying an uncured product 14 to solidify or for drying and subsequently sintering the uncured product being discharged from the extruder 3 and having internal peripheral walls 12 and the fluid passages 11.

### ADVANTAGES AFFORDED HEREIN

As described above, the adsorbent of the present invention may be manufactured using any ordinary extruder in combination with a certain peculiar mold. This mold for shaping a mass that is being extruded does have a number of thin and elongate pins fixed upright on the mold, with a small clearance between the adjacent pins. Each pin has a cross section of the same configuration as the fine fluid passages to be formed in the adsorbent. A fluidic mixture prepared by kneading powdery raw materials with use of water is thus pressed into those clearances or interstices to thereby give an uncured product to be subsequently dried, hardened and further sintered if necessary, so as to provide a finished adsorbent. The adsorbent made in this manner is a rigid mass similar to ceramics and nevertheless highly porous due to a number of minute flow passages formed therein. Its internal surface in contact with a foreign fluid passing it has thus a remarkably increased area per unit volume. Flow resistance and adsorption capacity can be adjusted reproducibly by changing the dimension of such minute flow passages, by altering the particle size and/or properties of raw materials. Such an enormous number of regularly arranged fine passages enable the present adsorbent to serve as a kind of filter for continuously cleaning a large volume of air or water that is to be protected from spoiling. The adsorbent now rendered lower in density, lighter in weight and easy to after-process into any desired shape and size can be used in any fields. In addition, any pigments or any powder of metals such as copper and aluminum may be blended with the raw material to afford a beautifully tinted appearance. Such a tinted adsorbent in the form of a thin sheet may directly be adhered to any internal wall portion in a house, whereby any toxic gases emitted from the other building materials and adhesives will be adsorbed and removed out of the interior of the house. If any part of an external wall of the house is formed with the adsorbent, then it will not only afford a good ventilation and render the house well-lighted, but also purify ambient air likely to flow into the house. In any case, metal powders such as copper or aluminum powder dispersed in the adsorbent will serve to protect human bodies from any hazardous magnetic force or electromagnetic waves.

In manufacture of the present adsorbent, any ordinary extruder may be combined with the characteristic mold provided herein so as to continuously produce it in the same manner as in the conventional extrusion process. Thus, manufacture cost will not rise to any noticeable degree but remain inexpensive and comparable to that incurred in the ordinary extrusion process.

### BEST MODES OF CARRYING OUT THE INVENTION

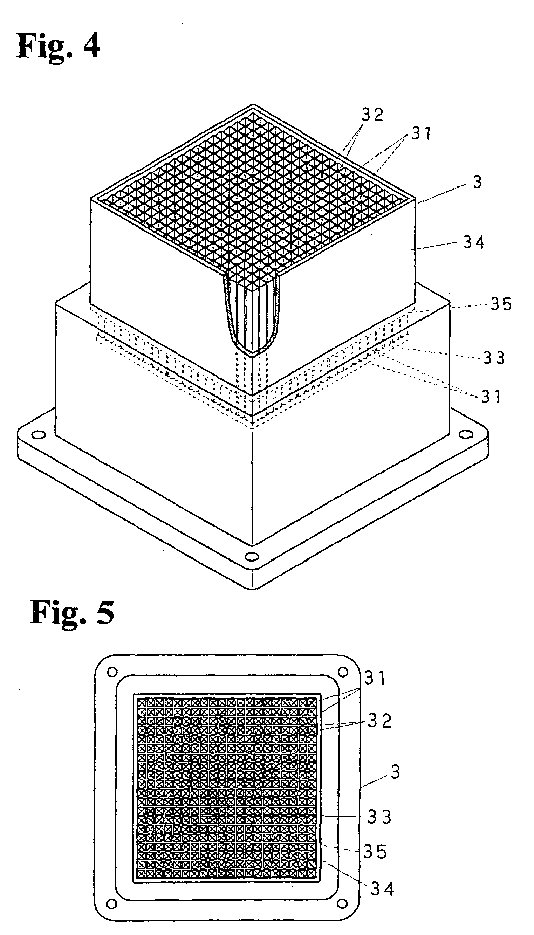

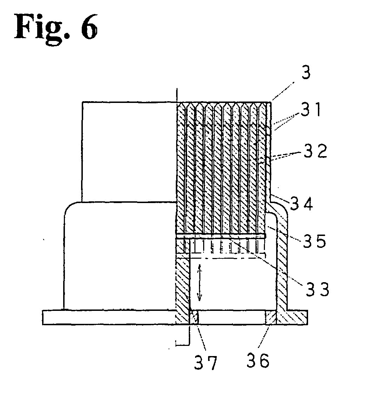

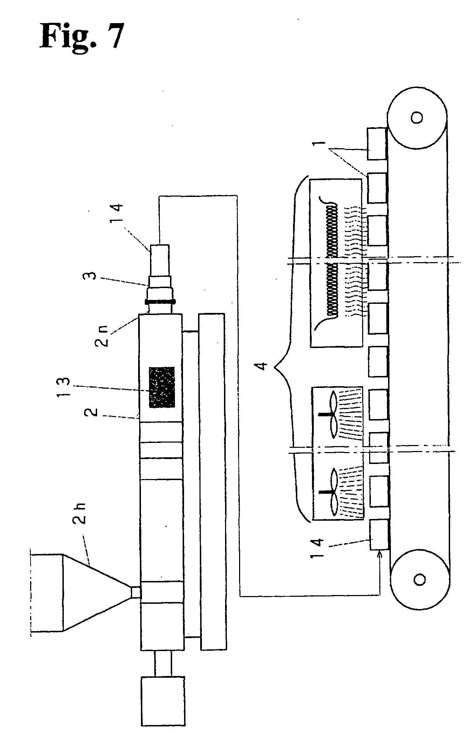

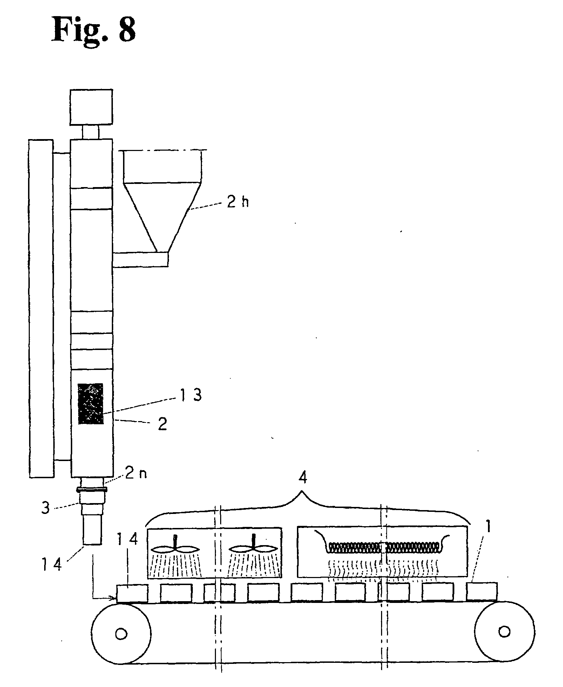

Now, the best modes of carrying out the present invention will be summarized referring to the drawings. Any conventional screw type extruder 2 may be employed herein to lie horizontal as shown in Fig. 7. In this case, depending on the fluidity of a mixture 13, an uncured product 14 will possibly deform itself due to gravitational force when delivered from the extruder. Therefore, length of the cylindrical wall or mantle 34 of a mold may be adjusted, or the drying process may be accelerated, or alternatively, the extruder may stand vertical as shown in Fig. 8. As seen in Figs. 5 and 6, the mold 3 may be composed of a number of thin and elongate pins 31, a base plate 33, a cylindrical wall or mantle 34 and a support 36 for the base plate. Inside the cylindrical wall 34, the pins 31 are fixed upright on the base plate 33, with a small clearance 32 between the two adjacent pins. A raw material, i.e., a fluidic mixture 13 will be pressed into and caused to flow through a detour 35 that is defined between the mantle 34 and base plate 33. Each pin 31 may be of a desired cross-sectional shape, square, rectangular, round, triangular, trapezoid or any other else. In one embodiment described below, the pins are square to increase the internal surface area of each fluid passage 11. However, they may be of round or triangular cross sections as in the modifications of said embodiment so that the level of resistance against the flow of fluidic mixture 13 entering the mold is altered. In these cases, the ratio of an effective adsorbing volume to an apparent overall volume of the resultant adsorbent will also change, affecting the adsorption capacity thereof. The base plate 33 may be fixed in position relative to the mantle 34 so as to keep constant the cross-sectional area of detour 35 for feeding the raw material. Alternatively, the base plate may be held displaceable along a prop 37, up and down above and relative to the support 36. The cross-sectional area of detour 35 for the kneaded mixture 13 will thus be changed depending on the fluidity thereof, to thereby adjust the efficiency of extrusion process.

Raw materials of the adsorbent are a powder of carbonaceous material, another powder of natural or synthetic inorganic material, a natural adhesive paste such as laver, starch or the like serving as a binder, and water used to knead these ingredients. The carbonaceous material may be charcoal, animal charcoal, bamboo charcoal or the like. Activated clay or kaolin, clay, cement, mortar, alumina, silica, zeolite and the like are examples of the inorganic material. In preferable recipes, contents of the carbonaceous material, the inorganic material and the natural paste are 70 - 90 % by weight, 5 - 10 % by weight and 5 - 10 % by weight, respectively. About 8 - 25 % by weight of water will be needed to knead and blend these ingredients with each other.

The ingredients listed above are intermixed according to a selected recipe, and fed to the hopper 2h of the extruder 2, in which they will be kneaded together to give a fluidic mixture 13 forced towards the nozzle 2n. This mixture is thus compressed and propelled into the interior of mantle 34 via the detour 35 around the base plate 33. As a result, all the clearances 32 formed between the adjacent pins 31 are filled with the mixture 13. The pressure, which the extruder 2 is imparting on this mixture, will cause it to move along the inner surface of cylindrical mantle 34 and the pins 31 towards an exit of the mold. The fluidic mixture thus discharged from the exit will show a contour corresponding to the mantle inner surface 34 and have vacant fluid passages 11 formed as the traces or vestiges of pins 31, thus providing an uncured product 14 that resembles a honeycomb in structure.

Such an uncured product 14 will subsequently be merely dried, or successively dried and then sintered, to give an adsorbent 1. In some cases wherein carbonaceous material is the main ingredient in the adsorbent 1, the sintering temperature may preferably be about 600 - 800 °C, below the charcoal making temperature. If the sintering is carried out at 1000 - 1200 °C, above the charcoal making temperature, then the carbonaceous material will be exhausted to give a waterproof adsorbent so rich in voids as resembling a pumice in appearance and properties. Charcoal burned at 500 - 600 °C will be useful to lower the sintering temperature in the latter case. In a different case wherein any carbonaceous material is not used at all but the inorganic material is solely used, a waterproof and mechanically stronger adsorbent 1 thereby obtained will resemble unglazed pottery in appearance and nature. 20 - 40 % by weight of a copper powder may be added to the carbonaceous and inorganic materials to form the raw material, whereby the adsorbent 1 will have a metallic appearance with a unique glaze. Proper pigments may also be added to the raw material so as to tint the adsorbent 1 with any desired hues.

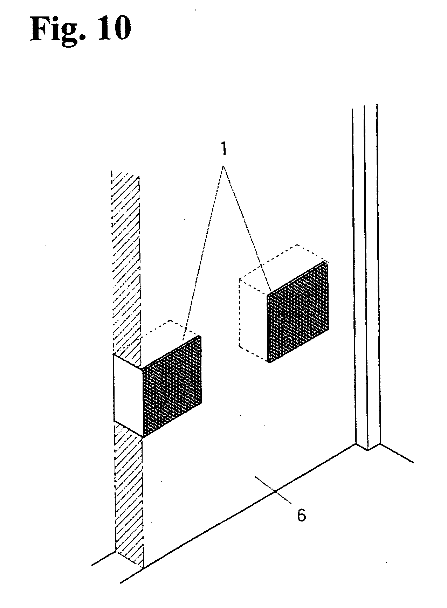

The adsorbent 1 of the invention may be used as follows. (1) It may be placed in a water purifying or water reserving tank equipped in an apartment, condominium or the like, so as to clean up and protect water from becoming rotten. It may be severed into smaller pieces to be put in a flower bowl or vase in order to prolong the life of flowers. (2) It may be installed in a water supply piping, upstreamly or downstreamly of a city water tap or cock 5, or in a detachable water cleaner, so as to filter a drinking water and/or remove therefrom any ill-smelling impurities. (3) It may also be used in air as a filter for air-conditioners or as a filter for exhausted gases from engines. (4) Since it is easy to machine or otherwise process into any desired finished shape and dimension, it may substitute well for a variety of conventional adsorption bags each holding therein a conventional adsorbent. It will be effective to remove any bad smell, separate any impurities from any target liquids or gases, and/or to decolorize them. (5) Also by virtue of its easiness to mechanically or otherwise process, one or more parts of a building wall may be replaced by the adsorbent of the present invention as is illustrated in Fig. 10. In this use, the adsorbent will clean the incoming air, enhance ventilation and/or improve lighting of the interior of such a building. If the adsorbent is given a decorative effect by means of a pigment, a copper or aluminum powder, or the like, it can be provided as thin sheets for attachment to parts of any house or building walls so as to interrupt magnetic force and electromagnetic waves and also to adsorb and remove any hazardous gases and bad smell.

### THE PREFERRED EMBODIMENTS

Fig. 1 is a perspective view of an adsorbent provided in a first embodiment, shown partly in cross section;
Fig. 2 is a perspective view of a modification of the first embodiment, shown partly in cross section;
Fig. 3 is a perspective view of another modification of the first embodiment, also shown partly in cross section;
Fig. 4 is a perspective view of a mold for use to manufacture the adsorbent of the first embodiment, with a part being cut out;
Fig. 5 is a plan view of the mold;
Fig. 6 is a side elevation of the mold, with a vertical half thereof being shown in cross section;
Fig. 7 is a scheme of a layout in an apparatus designed for making the adsorbent of the invention;
Fig. 8 is a scheme of another layout in the apparatus;
Fig. 9 is an illustration of the present adsorbent in one use; with its portion being cut off; and
Fig. 10 is a perspective view of the adsorbent in another use.

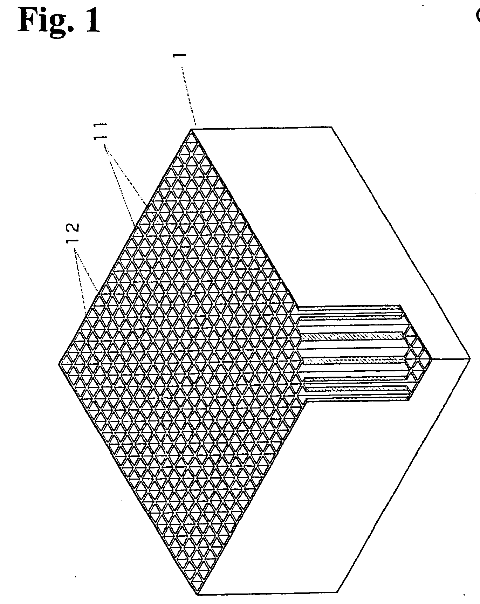

A first embodiment shown in Fig. 1 is provided herein from a first aspect of the present invention as defined in the accompanying claim 1. An adsorbent 1 of this embodiment may be produced by means of a mold 3 shown in Figs. 4 to 6, and using an apparatus shown in Fig. 7. Each of fluid passages 11 is a square cross section, and a peripheral wall 12 defining each passage to extend therethrough is made from a mixture composed of 85 % by weight of a charcoal powder, 7.5 % by weight of clay and 7.5 % by weight of a natural adhesive paste. 8 - 15 % by weight of water is added to this mixture to knead and mix the ingredients within an extruder 2, thereby forming a fluidic mixture 13. This mixture compressed in the extruder is forced into the mold 3 through a nozzle 2n. An uncured product 14 thus shaped in and discharged from the mold 3 but remaining somewhat plastic will then be dried, before sintered at 600 °C to give a finished product of adsorbent. Each fluid passage 11 of this adsorbent has a square cross section whose four sides are each about 1 *mm* long, and each of partitions 12 between the adjacent passages 11 is about 0.2 *mm* thick.

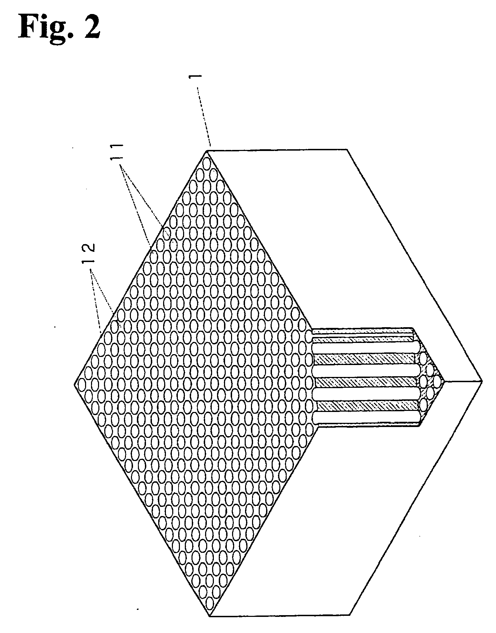

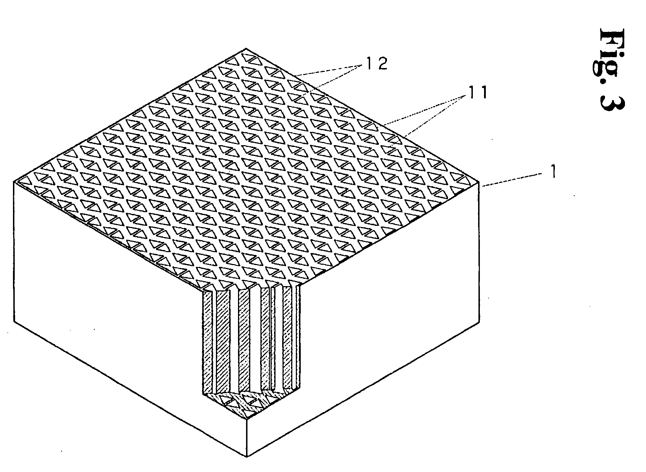

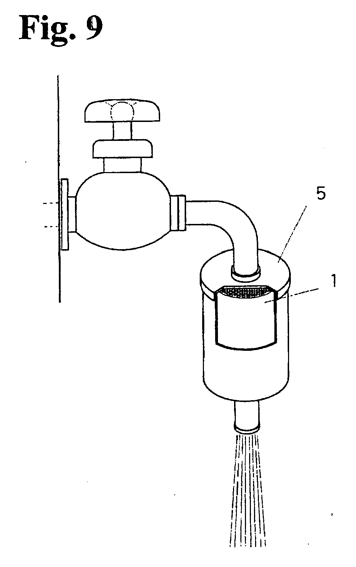

A modification shown in Fig. 2 has fluid passages 11 that are each round in cross section, with its diameter being 1.2 *mm.* Another modification of Fig. 3 has passages 11 that are each triangular in cross section, with each of three sides being 1.5 *mm* long. The adsorbent of the first embodiment has square fluid passages with a sufficient area in contact with the fluid flowing therethrough. However, the other adsorbents of the above modifications provide a different total area of fluid passages effective to contact the fluid and to adsorb impurities therefrom, notwithstanding the same apparent overall volume of adsorbent. Resistance against pressure applied to the kneaded mixture of raw materials and forcing it into each clearance 32 between the adjacent pins 31 will change by slightly increasing the average size of the clearances 32. Cross-sectional shape of the fluid passages 11 may be further modified to be other than those as shown above, and arrangement of them may be made denser or coarser. Fig. 9 shows the adsorbent 1 of first embodiment in use as a water purifier, wherein a trap 5 disposed adjacent to and in the outlet of a city water cock holds the adsorbent of a cylindrical shape.

An adsorbent of a second embodiment is produced similarly to the first embodiment, using a similar composition as the raw material, except for a reduced content of the carbonaceous material. The raw material mixture is molded and then sintered at 1200 °C to thoroughly combust the carbonaceous material, so as to obtain the adsorbent almost composed solely of the inorganic material. The resultant adsorbent has a highly porous internal texture like pieces of pumice, and almost colorless as compared that of first embodiment. It is more suited to coloration with any inorganic pigment or metal powder so as to serve also as a decorative article. This adsorbent of the second embodiment has a much higher adsorption capacity than a comparative colorless adsorbent that may be made by using only the inorganic material and sintering an uncured product. Fig. 10 illustrates the adsorbent 1 of second embodiment in use, wherein it takes the form of plates made as thick as the ordinary house walls 6. Wall portions are replaced with the adsorbent plates so that they will function to purify the internal atmosphere and show an ornamental effect.

Fig. 7 illustrates an apparatus employed to carry out a method proposed herein from the second aspect of invention. A screw-type extruder 2 has a hopper 2h connected thereto to feed the raw materials of adsorbent, and a mold 3 is mounted in an extrusion nozzle 2n disposed at the distal end of this extruder. As will be seen in Figs. 4 to 6, the mold 3 comprises a cylindrical wall or mantle 34 and a base plate 33 therein to define a detour 35 for the raw materials between the mantle and base plate. The base plate 33 capable of normally resting on a support 36 can be along a prop 37 towards and away from the exit of this mold. A plurality of pins 31 of the same cross section as the cylindrical fluid passages 11 to be formed in the adsorbent 1 are fixed upright on the base plate 33. The adjacent pins 31 separated from each other by a narrow clearance 32 stand in parallel with each other. Either a powdery mixture of carbonaceous and inorganic materials, or another mixture of the inorganic material powder, a binder and water, will be supplied to the hopper 2h and then kneaded within the extruder to give a fluidic mixture 13. This mixture subsequently extruded out from the nozzle 2n will advance through the detour 35 and then into the clearances 32 between the adjacent pins 31. Taken out at the exit of mold 3 is an uncured product 14 such that a trace of each pin remains vacant and surrounded by each peripheral wall 12 inside this product 14. The reference numeral 4 denotes facilities for merely drying or successively drying and sintering such an uncured product 14. The base plate 33 integral with the upright pins 31 may be raised or lowered along the prop 37 relative to the cylindrical mantle 34, taking into account the viscosity or fluidity of mixture 13 then being used. The cross-sectional opening area of detour 35 is changed in this manner to smoothly force the mixture 13 into the mold. Fig. 8 shows a modification of the apparatus of Fig. 7, in which the extruder 2 is disposed vertically together with the mold 3 so that the mixture will be extruded downwards.

### USES IN THE INDUSTRIAL FIELDS

The adsorbent of the invention has a number of fluid passages formed with adsorbing materials, so that its capacity of adsorbing bad smells and hazardous gases as well as its ability of purifying air and water are enhanced. Further, because the adsorbent maintains itself any shape with an aesthetic appearance given to it, it is easier to use readily in more fields than the prior art one has been. In the method of and apparatus for making such an adsorbent of the invention, only a specified nozzle portion need be added so as to utilize any ordinary extruders and relevant facilities. The cost of equipment can be suppressed, while enabling a continuous, efficient and inexpensive production, and ensuring many uses.

### BRIEF DESCRIPTION OF THE DRAWINGS

[Fig. 1] Perspective view of an adsorbent provided in a first embodiment, shown partly in cross section.
[Fig. 2] Perspective view of a modification of the first embodiment, shown partly in cross section.
[Fig. 3] Perspective view of another modification of the first embodiment, also shown partly in cross section.
[Fig. 4] Perspective view of a mold for use to manufacture the adsorbent of the first embodiment, with a part being cut out.
[Fig. 5] Plan view of the mold.
[Fig. 6] Side elevation of the mold, with a vertical half thereof being shown in cross section.
[Fig. 7] Scheme of the layout in an apparatus designed for making the adsorbent of the invention.
[Fig. 8] Scheme of another layout in the apparatus.
[Fig. 9] Illustration of the present adsorbent in one use; with its portion being cut off.
[Fig. 10] Perspective view of the adsorbent in another use.

### REFERENCE NUMERALS

- 1 ....: Adsorbent
- 11 ....: Fluid passages
- 12 ....: Peripheral walls
- 13 ....: Fluidic mixture
- 14 ....: Uncured products
- 2 ....: Extruder
- 2n ....: Nozzle
- 2h ....: Hopper
- 3 ....: Mold
- 31 ....: Pins
- 32 ....: Clearances
- 33 ....: Base plate
- 34 ....: Cylindrical wall or mantle
- 35 ....: Detour for the flow of raw material
- 36 ....: Support for the base plate
- 37 ....: Prop
- 4 ....: Solidifying and sintering facilities
- 5 ....: Trap
- 6 ....: House walls

## Claims

1. An adsorbent comprising a plurality of internal peripheral walls (12) formed of a porous and adsorbing material such that each of these walls defines therein and longitudinally thereof a fine cylindrical fluid passage (11), wherein the peripheral walls (12) are consolidated together to form a rigid mass such that a plurality of the fluid passages (11) are arranged close to and in parallel with each other in every direction, vertical, horizontal and oblique.

2. An adsorbent as defined in claim 1, wherein the porous and adsorbing material forming the peripheral walls (12) is a sintered mixture of a carbonaceous material powder such as charcoal, bamboo charcoal, animal charcoal or the like and an inorganic material powder such as cement, waterproof mortar, kaolin, clay or the like.

3. An adsorbent as defined in claim 1, wherein the porous and adsorbing material forming the peripheral walls (12) is a sintered residue of a mixture of a carbonaceous material powder such as charcoal, bamboo charcoal, animal charcoal or the like and an inorganic material powder such as cement, waterproof mortar, kaolin, clay or the like, such that the carbonaceous material powder is burnt and exhausted thoroughly.

4. An adsorbent as defined in claim 1, wherein the porous and adsorbing material forming the peripheral walls (12) is a sintered inorganic material powder such as cement, waterproof mortar, kaolin, clay or the like.

5. A method of making an adsorbent comprising the steps of:
preparing a mold (3) to be attached to a distal end of a nozzle (2n) in an extruder (2), such that a cylindrical wall (34) surrounds a base plate (33) held therein and a detour (35) for a raw material forming the adsorbent is defined around the base plate, and a plurality of thin and elongate pins (31) each of the same cross section as that of each of fine cylindrical fluid passages (11) present in the adsorbent 1 are fixed upright on the base plate (33) in such a state that minute clearances 32 intervene each between the adjacent pins (31);
preparing as the raw material a fluidic mixture (13) that may either be composed of a carbonaceous material powder and an inorganic material powder, or composed of an inorganic material powder and a binder kneaded and blended therewith using water;
then continuously forcing the fluidic mixture as the raw material into the clearances (32) between the adjacent pins (31) so as to form a material flow, by directing it away the extruder (2) and then into the detour (35) formed for the raw material in the mold (3);
consequently keeping the material flow to provide an uncured product (14) near and outside an exit of the mold (3) in such a state that the uncured product has a plurality of fluid passages (11) each defined through an internal peripheral wall (12) due to continuous spaces which the pins (31) have been occupying; and
finally finishing the uncured product (14) to give the adsorbent (1), either by merely drying or by successively drying and sintering the uncured product.

6. An apparatus for making an adsorbent comprising:
a hopper (2h) for storing therein and feeding therefrom a raw material for forming the adsorbent;
an extruder (2) having a nozzle (2n);
a mold (3) constructed such that a cylindrical wall (34) surrounds a base plate (33) held therein and a detour (35) for the raw material is defined around the base plate and a plurality of thin and elongate pins (31) each of the same cross section as that of each of fine cylindrical fluid passages (11) present in the adsorbent (1) are fixed upright on the base plate (33) in such a state that minute clearances (32) intervene each between the adjacent pins (31), with the mold (3) being attached to a distal end region of the nozzle (2n); and
facilities (4) for drying an uncured product (14) to solidify or for drying and subsequently sintering the uncured product being discharged from the extruder (3) and having internal peripheral walls (12) and the fluid passages (11).
